# FASCICULE DE BREVET EUROPEEN

(11) **EP 0 449 684 B1**
(45) Date de publication et mention de la délivrance du brevet: **28.02.1996**
(21) Numéro de dépôt: 91400605.1
(22) Date de dépôt: 05.03.1991
(51) Int. Cl.: B32B 17/10, C03C 27/12

(54) **Dispositif pour l'assemblage par pressage des vitrages feuilletés**
Vorrichtung zum Zusammenfügen durch Pressen von Verbundgläsern
Apparatus for assembly by pressing of laminated glass

(30) Priorité: 08.03.1990 FR 9002922
(43) Date de publication de la demande: 02.10.1991
(73) Titulaire: SAINT-GOBAIN VITRAGE, F-92400 Courbevoie (FR)
(72) Inventeur: Didelot, Claude M., F-60150 Thourotte (FR); Wattiau, Gilles M., F-60400 Baboeuf (FR)
(74) Mandataire: Muller, René

(56) Documents cités:
- EP-A- 0 189 345
- DE-A- 3 518 185
- FR-A- 807 069

## Description

La présente invention concerne la fabrication des vitrages feuilletés et en particulier un dispositif pour l'assemblage des éléments constitutifs d'un vitrage feuilleté par pressage, en particulier par calandrage, c'est-à-dire par passage de l'empilage desdits éléments constitutifs, que l'on désignera aussi par vitrage dans la suite de la description, entre des moyens supérieurs et des moyens inférieurs de pressage.

Les dispositifs connus de calandrage, décrits par exemple dans la publication de brevet français FR-B-2 053 104, sont généralement équipés de deux séries de galets ou rouleaux de pressage : une série de rouleaux inférieurs disposés les uns à côté des autres, leur position pouvant être réglée indépendemment de façon à obtenir une courbure correspondant à la courbure transversale désirée qui est généralement la courbure moyenne du vitrage, et une série de rouleaux supérieurs disposés sensiblement de la même façon. Dans les dispositifs connus, les deux séries de rouleaux sont montées chacune sur une poutre transversale appartenant à un cadre pouvant pivoter autour d'un axe horizontal, l'ensemble constituant un équipage mobile, de sorte que les rouleaux restent sensiblement perpendiculaires au vitrage durant toute l'opération d'assemblage.

Au cours du passage du vitrage entre les rouleaux, la position de ces rouleaux doit varier pour suivre les modifications de la courbure transversale du vitrage. A cette fin, on a déjà proposé dans la publication de brevet européen EP-A-0 189 345 une calandreuse utilisant des vérins pneumatiques procurant une grande souplesse aux rouleaux dans le suivi de la courbure du vitrage. Dans cette calandreuse, dite "flottante", les chambres de compression des vérins des rouleaux supérieurs et celles des vérins des rouleaux inférieurs sont en communication et la pression pneumatique s'exerçant sur un rouleau de pression est égale à celle s'exerçant sur un rouleau de contre-pression. La partie pré-caractérisante de la revendication 1 est connue de ce document.

Ces dispositifs conviennent généralement pour l'assemblage des vitrages présentant un bombage transversal peu accentué et régulier et lorsque ce bombage transversal du vitrage est sensiblement le même sur toute la longueur du vitrage. Mais pour des vitrages à formes plus complexes, notamment pour des vitrages présentant un bombage très profond dans la section transversale et/ou irrégulier sur la longueur du vitrage, ces dispositifs connus ne sont pas toujours satisfaisants,car ils ne sont pas suffisamment souples pour pouvoir suivre toutes les modifications importantes de courbure. Si la pression des rouleaux est trop faible, il s'ensuit une adhésion insuffisante ou peu homogène des éléments constitutifs du vitrage ou, au contraire, si la pression est trop forte des ruptures du vitrage.

Pour augmenter la souplesse du dispositif, la demanderesse propose d'utiliser des rouleaux de faible largeur et d'en augmenter le nombre. Mais cette proposition entraîne un autre problème, celui de l'encombrement des vérins pneumatiques disposés les uns à côté des autres dans le plan vertical passant par la ligne de pressage.

L'invention obvie aux inconvénients cités.

L'invention propose un dispositif pour l'assemblage par pressage des vitrages feuilletés symétriques ou asymétriques, capable d'opérer aussi bien sur des vitrages à double bombage peu accentué et régulier que sur des vitrages à formes complexes pouvant présenter des bombages très accentués et/ou irréguliers. Par double bombage, on entend selon l'invention, un vitrage présentant à la fois une courbure longitudinale et à la fois une courbure transversale. Par vitrages feuilletés symétriques, on entend selon l'invention des vitrages feuilletés dont les deux faces sont constituées de feuilles rigides telles des feuilles de verre. Par vitrages feuilletés asymétriques, on entend des vitrages feuilletés formés d'un support rigide monolithique ou feuilleté et d'une feuille souple en matière plastique ayant les propriétés désirées, par exemple les vitrages asymétriques décrits dans les publications de brevets français FR-B-2 398 606 et européens EP-B-0 132 198 et EP-B-0 131 523.

Le dispositif selon l'invention comprend au moins un ensemble de rouleaux de pressage s'étendant transversalement commandés par au moins un ensemble de vérins, les rouleaux de pressage étant montés au moins en partie par paires sur la tige d'un même vérin par un système d'articulation permettant un mouvement relatif d'un rouleau par rapport à l'autre dans la direction de pressage.

Le montage de deux rouleaux sur un même vérin permet de doubler le nombre de rouleaux pour un même encombrement de vérins et par là d'augmenter notamment l'efficacité du pressage dans les parties de la ligne de pressage où les courbures sont très accentuées.

Les deux rouleaux actionnés par un même vérin peuvent être montés sur un système d'articulation à parallèlogramme articulés, les tiges portant les deux rouleaux constituant deux côtés parallèles du parallèlogramme, et étant guidées pour rester parallèles entre elles et à même distance l'une de l'autre.

Selon une réalisation du dispositif selon l'invention, les deux rouleaux actionnés par un même vérin sont montés à l'extrémité de deux tiges parallèles entre elles, elles-mêmes montées au bout de la tige du vérin par le système d'articulation, de sorte que l'action du vérin est située dans le plan de pressage.

Dans une variante, les deux tiges parallèles des deux rouleaux sont situées dans un plan différent du plan d'action de la tige du vérin, l'action étant transmise par l'intermédiaire d'un levier rattaché à l'articulation de liaison entre les deux tiges des rouleaux.

Le montage de deux rouleaux pouvant être actionné par un même vérin, peut être utilisé pour tous les rouleaux faisant partie de l'ensemble supérieur de pressage et/ou pour tous les rouleaux faisant partie de l'ensemble inférieur de pressage.

Dans une variante, seule une partie des rouleaux est constituée de rouleaux montés par paire de rouleaux articulés au bout de la tige des vérins.

Le montage par paire de rouleaux selon l'invention peut être utilisé pour équiper une calandreuse comprenant un ensemble supérieur de rouleaux de pressage et un ensemble inférieur de rouleaux de pressage.

Ce montage par paire peut être utilisé aussi selon l'invention, pour équiper une calandreuse, comprenant un rouleau souple s'étendant sur toute la largeur utile du dispositif d'assemblage, rouleau qui est cintré pour lui donner la courbure désirée par un ensemble de rouleaux supérieurs.

Dans ce cas, et généralement ce ne sont que les rouleaux inférieurs de pressage qui sont montés par paires selon l'invention.

Le montage par paire peut être utilisé également selon l'invention pour les rouleaux supérieurs d'un dispositif d'assemblage utilisant un support de forme en tant que moyens de pressage inférieurs.

D'autres avantages et caractéristiques de l'invention apparaîtront dans la description suivante de réalisations, faite en référence aux figures.

La figure 1 représente de face et en élévation une réalisation d'un dispositif comprenant un ensemble de rouleaux supérieurs de pressage et un ensemble de rouleaux inférieurs de pressage, ces rouleaux étant montés par paires et articulés au bout de la tige des vérins.

La figure 2 représente le montage d'une paire de rouleaux de pression et d'une paire de rouleaux de contre-pression, commandés par deux vérins, dont les chambres de pression sont connectées l'une à l'autre.

La figure 3 représente le montage de deux rouleaux sur la tige d'un vérin placée dans le plan de pressage comme dans le cas du dispositif de la figure 1.

La figure 4 représente le montage de deux rouleaux actionné par un vérin, disposé dans un plan différent de celui du plan de pressage.

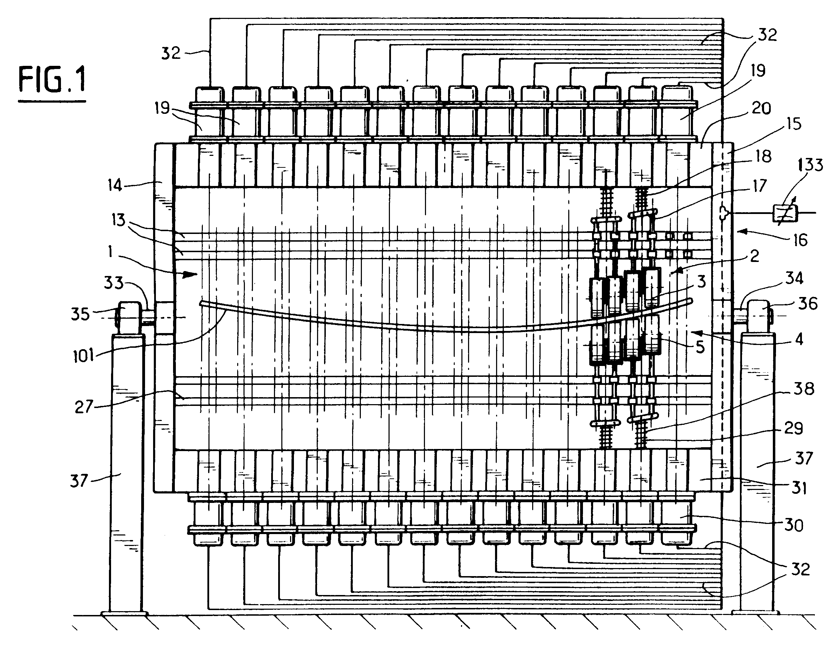

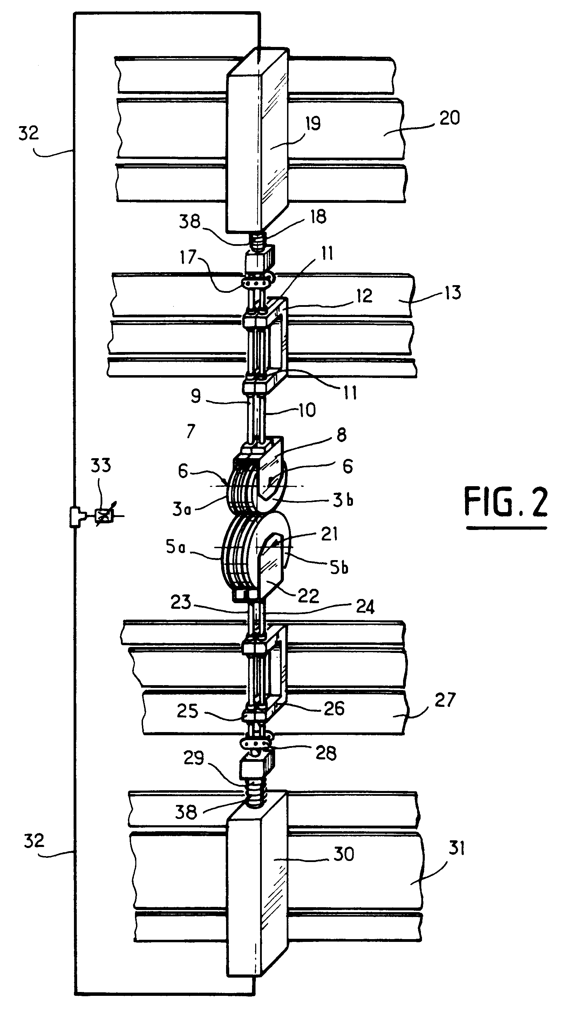

Le dispositif représenté sur la figure 1 et partiellement sur la figure 2 comprend un équipage mobile 1 muni d'un ensemble 2 de rouleaux supérieurs 3 de pressage et d'un ensemble 4 de rouleaux inférieurs de pressage 5 (tous les rouleaux ne sont pas représentés).

Les rouleaux supérieurs 3 sont montés par paire (3a, 3b) autour d'axes 6, portés par des chapes 7, 8 placées au bout de tiges 9, 10 guidées verticalement et coulissantes dans des bagues 11 portées par des supports 12 fixés à une poutre horizontale 13, s'étendant entre les deux montants 14, 15 d'un cadre 16 portant l'équipage mobile 1.

Les tiges 9, 10 portant les rouleaux 3 sont associées par paires en étant rattachées à des articulations 17, elles-mêmes liées aux tiges 18 des vérins 19. Les vérins 19 sont fixés à une poutre horizontale supérieure 20. Ainsi, un même vérin agit sur deux rouleaux voisins dont les positions en profondeur dans la direction de pressage peuvent varier grâce à l'articulation 17 reliant leurs tiges. On peut ainsi doubler le nombre de rouleaux pour un même encombrement des vérins dans l'équipage mobile.

Les rouleaux inférieurs 5 sont de la même façon montés par paire (5a, 5b) autour d'axes 21 portés par des chapes 22 placées en bout de tiges 23, 24 guidées verticalement et coulissantes dans des bagues 25 portées par des supports 26 fixés à une poutre horizontale 27 s'étendant entre les deux montants 14, 15 du cadre portant l'équipage mobile. Les deux tiges 23, 24 des rouleaux sont associées par paires et rattachées à des articulations 28 liées aux tiges 29 des vérins inférieurs 30. Les vérins inférieurs 30 sont fixés à une poutre horizontale inférieure 31.

Les vérins utilisés sont avantageusement des vérins pneumatiques à membrane comme décrits dans la publication de brevet européen EP-B-0 189 345. Les chambres de pression des vérins actionnant les rouleaux supérieurs sont connectés à l'aide de conduits 32 avec les chambres de pression des vérins actionnant les rouleaux inférieurs leur faisant face. La pression peut être réglée à la valeur souhaitée, à l'aide d'une valve 133, pour chacun des équipages travaillant en opposition.

Le cadre mobile 16 est monté sur deux arbres horizontaux 33, 34 alignés tournant dans des paliers 35, 36 portés par le bâti 37.

Dans une réalisation (non représentée) du dispositif, il peut être prévu un montage des arbres horizontaux permettant un mouvement de montée-baisse du cadre mobile par rapport au bâti.

L'ensemble des rouleaux inférieurs comprend au moins un et généralement au moins deux rouleaux moteurs entraînés par l'intermédiaire d'un système de transmission par un moteur (non représentés). Le moteur est avantageusement placé sur le cadre mobile à l'emplacement désiré et participe ainsi à l'équilibrage de l'équipage mobile.

Afin de simplifier le dispositif, le ou les rouleaux moteurs peuvent être montés seuls ou par paires sans articulations, sur les tiges des vérins.

Un dispositif avantageux pour l'entraînement des rouleaux-moteurs d'une calandreuse est décrit par exemple dans la demande de brevet français FR-A-88 14742. Ce dispositif comprend un arbre de transmission fixe et non déformable monté sur le cadre mobile, relié au groupe moteur par une chaîne ou une courroie et à chaque rouleau moteur par l'intermédiaire d'un système de transmission comprenant un renvoi d'angle et un ensemble articulé déformable dans une direction essentiellement verticale. L'ensemble articulé déformable est avantageusement formé d'un arbre sensiblement vertical comprenant deux cardans et un arbre cannelé.

Autour de la tige des vérins, il peut être avantageusement prévu au moins pour les vérins inférieurs, un ressort 38 entre le corps du vérin et l'extrémité de la tige afin de compenser le poids d'un des deux rouleaux inférieurs et de l'élément de pressage supérieur et ou de maintenir la tige des vérins à une longueur désirée.

Dans une variante, on peut équiper les vérins inférieurs de ressorts pneumatiques tel que ceux décrits dans la publication de brevet européen EP 0 189 345.

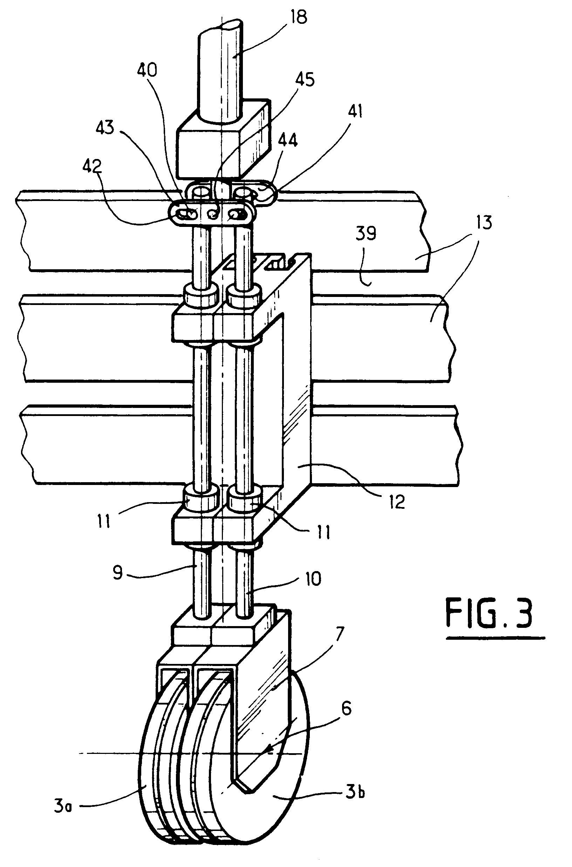

Sur la figure 3, on a représenté plus en détail le montage selon l'invention d'une paire 3a, 3b de rouleaux 3 sur la tige 18 d'un vérin.

Les deux tiges parallèles 9, 10 des rouleaux sont guidées dans les bagues 11, maintenu par les supports 12 dont les positions peuvent être réglées par glissement sur les rainures 39 prévues dans la poutre 13. Les extrémités supérieures des deux tiges sont traversées par deux axes 40, 41 perpendiculaires aux dites tiges montés coulissants dans des trous oblongs 42 de deux pièces de raccord 43, 44 qui pivotent autour d'un axe central 45 fixé sur l'extrémité inférieure de la tige 18 du vérin. Les deux tiges 9, 10 des rouleaux présentent ainsi une liberté de mouvement l'une par rapport à l'autre dans la direction de pressage, de sorte que les deux rouleaux peuvent appuyer plus efficacement sur un vitrage 101 présentant une courbure accentuée.

Le déplacement relatif d'un rouleau par rapport à l'autre peut être de plusieurs centimètres.

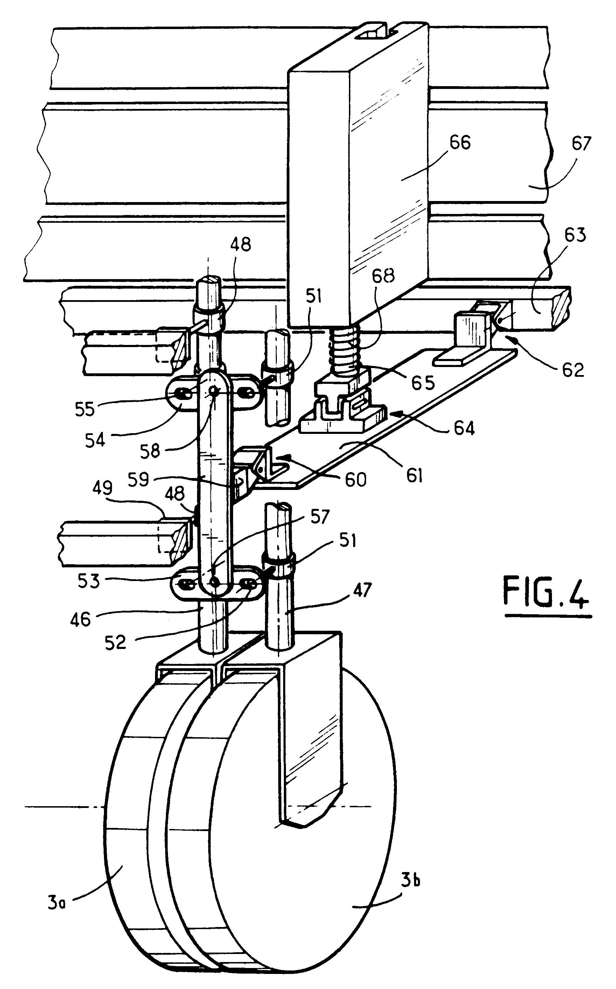

Sur la figure 4, on a représenté une variante d'un montage selon l'invention d'une paire de rouleaux actionnés par un même vérin. Dans cette variante, le corps et la tige du vérin sont disposés dans un plan différent du plan de pressage. Le vérin peut être placé dans un plan parallèle au plan de pressage comme représenté sur la figure.

Il peut, selon une autre réalisation non représentée, être placé dans un plan incliné par rapport au plan de pressage.

Sur la figure 4, les deux rouleaux 3a, 3b sont montés au bout de deux tiges 46, 47 coulissantes verticalement dans des bagues 48 tenues par des supports 49 fixés à une poutre horizontale 50 appartenant au cadre de la calandreuse comme dans la réalisation décrite précédemment en relation avec les figures 1, 2 et 3.

D'autres bagues 51 solidaires des tiges cette fois portent des axes 52 perpendiculaires auxdites tiges. Ces axes sont portés par deux pièces de raccord 53, 54 présentant des trous oblongs 55, dans lesquels peuvent coulisser lesdits axes 52. Les deux pièces de raccord 53, 54 sont reliées par une pièce intermédiaire 56 verticale à l'aide de deux axes 57, 58 autour desquels les pièces de raccord peuvent pivoter. Sur la pièce intermédiaire 56 est montée une pièce d'attache 59 coopérant avec une autre pièce 60 portée par un levier 61 qui, d'une part est monté articulé par un système d'articulation 62 sur une traverse horizontale 63 appartenant au cadre de la calandreuse et qui, d'autre part est relié par une autre articulation 64 à la tige 65 du vérin 66, lui-même monté sur la poutre 67, un ressort 68 de maintien de la distance entre le vérin et l'articulation peut être prévu sur la tige du vérin.

Ce système de montage à vérin hors du plan de pressage peut être avantageusement utilisé lorsque les vérins présentent un encombrement important. On peut ainsi disposer de façon alternée les vérins actionnant les paires articulées de rouleaux en plaçant ces vérins dans des plans différents, par exemple en distribuant de façon alternée les vérins d'un ensemble de pressage en sous-ensembles, chaque sous-ensemble étant placé dans un plan différent dont un au moins est hors du plan de pressage.

## Revendications

1. Dispositif pour l'assemblage par pressage d'un vitrage feuilleté, comprenant au moins un ensemble (2, 4) de rouleaux de pressage (3, 5) s'étendant transversalement, commandés par au moins un ensemble de vérins (19, 30), dans lequel les rouleaux de pressage sont montés au moins en partie par paires (3a, 3b, 5a, 5b) sur la tige (18, 29, 68) d'un même vérin, caractérisé en ce que ce montage est réalisé au moyen d'un système d'articulation (17, 28) permettant un mouvement relatif d'un rouleau par rapport à l'autre dans la direction de pressage.

2. Dispositif selon la revendication 1, caractérisé en ce que les deux rouleaux (3a, 3b, 5a, 5b) d'une paire sont montés à l'extrémité de deux tiges parallèles (9, 10), guidées pour rester parallèles entre-elles et à même distance l'une de l'autre, les deux tiges étant reliées à la tige (18, 29, 68) du vérin (19, 30, 66) par un système d'articulation (17).

3. Dispositif selon la revendication 2, caractérisé en ce que pour au moins une partie des paires de rouleaux (3a, 3b, 5a, 5b), les deux tiges parallèles (9, 10) sont montées au bout de la tige (18) de vérin (19) par le système d'articulation (17), de sorte que l'action du vérin est située dans le plan de pressage.

4. Dispositif selon la revendication 2, caractérisé en ce que pour au moins une partie des paires de rouleaux (3a, 3b, 5a, 5b), les deux tiges parallèles (46, 47) sont situées dans un plan différent du plan d'action de la tige (65) du vérin (66) et elles sont reliées à ladite tige par le système d'articulation (64) comprenant notamment un levier (61).

5. Dispositif selon la revendication 4, caractérisé en ce que les vérins (66) placés dans un même plan et différent du plan de pressage forment un sous-ensemble de vérins.

6. Dispositif selon une des revendications 1 à 5, caractérisé en ce qu'il comprend un ensemble (2) de rouleaux supérieurs (3) de pressage et un ensemble (4) de rouleaux inférieurs (5) de pressage, ces ensembles comprenant chaque fois au moins en partie des rouleaux (3, 5) montés par paires ( 3a, 3b, 5a, 5b) sur les vérins (19, 30, 66).

7. Dispositif selon une des revendications 1 à 6, caractérisé en ce que les vérins (19, 30, 66) sont des vérins pneumatiques dont les chambres de compression des vérins supérieurs (19) sont connectés aux chambres de compression des vérins inférieurs (30) leur faisant face.

8. Dispositif selon une des revendications 1 à 7, caractérisé en ce qu'il comprend en tant que moyen de pressage supérieur, un rouleau presseur cylindrique souple s'étendant sur toute la largeur utile du dispositif et cintré sous l'action de rouleaux de pressage supérieurs (3).

9. Dispositif selon une des revendications 1 à 8, caractérisé en ce qu'il comprend un support de forme en tant que moyens inférieurs de pressage.

10. Dispositif selon une des revendications 1 à 9, caractérisé en ce que l'ensemble des rouleaux de pressage (3, 5) sont montés sur un cadre pivotant (16).

11. Dispositif selon la revendication 10, caractérisé en ce que le cadre pivotant (16) est monté sur des moyens (33-37) lui procurant un mouvement de montée-baisse.

12. Dispositif selon une des revendications 10 à 11, caractérisé en ce qu'il comprend au moins un rouleau moteur relié à un moteur par un système de transmission comprenant un arbre fixe et non déformable monté sur le cadre mobile (16), relié au moteur par une chaîne ou courroie et à chaque rouleau moteur par l'intermédiaire d'un système de transmission comprenant un renvoi d'angle et un ensemble articulé déformable dans une direction essentiellement verticale.

## Claims

1. Apparatus for the assembly by pressing of a laminated glass plate, comprising at least one assembly (2,4) of pressing rollers (3,5) extending transversely and controlled by at least one group of jacks (19,30), in which the pressing rollers are at least partly mounted in pairs (3a,3b,5a,5b) on the rod (18, 29,68) of the same jack characterized in that this is brought about by an articulation system (17,28) permitting a relative movement of one roller relative to the other in the pressing direction.

2. Apparatus according to claim 1, characterized in that the two rollers, (32,36,52,56) of a pair are mounted at the end of two parallel rods (9,10) guided so as to remain parallel and equidistant of one another, the two rods being connected to the rod (18,29,68) of the jack (19,30,66) by an articulation system (17).

3. Apparatus according to claim 2, characterized in that for at least part of the pairs of rollers (32,36,52,56) the two parallel rods (9,10) are mounted at the end of the rod (18) of the jack (19) by the articulation system (17), in such a way that the action of the jack is in the pressing plane.

4. Apparatus according to claim 2, characterized in that for at least part of the pairs of rollers (32,36,52,56), the two parallel rods (46,47) are located in a plane differing from the action plane of the rod (65) of the jack (66) and they are connected to said rod by the articulation system (64) incorporating a lever (61).

5. Apparatus according to claim 4, characterized in that the jacks (66) placed in the same plane and differing from the pressing plane form a subgroup of jacks.

6. Apparatus according to one of the claims 1 to 5, characterized in that it comprises an assembly (2) of upper (3) pressing rollers and an assembly (4) of lower (5) pressing rollers, said assemblies having on each occasion at least in part rollers (3,5) mounted in pairs (3a,3b,5a,5b) on jacks (19,30,66).

7. Apparatus according to one of the claims 1 to 6, characterized in that the jacks (19,30,66) are pneumatic jacks and the compression chambers of the upper jacks (19) are connected to the compression chambers of the lower jacks (30) facing them.

8. Apparatus according to one of the claims 1 to 7, characterized in that it comprises as upper pressing means a flexible cylindrival pressing roller extending over the entire useful width of the apparatus and bent under the action of the upper pressing rollers (3).

9. Apparatus according to one of the claims 1 to 8, characterized in that it comprises a shape support as the lower pressing means.

10. Apparatus according to one of the claims 1 to 9, characterized in that the assembly of pressing rollers (3,5) is mounted on a pivoting frame (16).

11. Apparatus according to claim 10, characterized in that the pivoting frame (16) is mounted on means (33-37) giving it a raising-lowering movement.

12. Apparatus according to one of the claims 10 or 11, characterized in that it comprises at least one motor roller connected to a motor by a transmission system having a fixed, non-deformable shaft mounted on the mobile frame (16) and connected to the motor by a chain or belt and to each motor roller via a transmission system having a bevel gear and an articulated assembly deformable in an essentially vertical direction.

## Patentansprüche

1. Vorrichtung zur Herstellung einer Verbundverglasung durch Pressen, welche Wenigstens einen Satz (2, 4) quer verlaufender Preßrollen (3, 5) umfaßt, die von wenigstens einer Einheit aus Zylindern (19, 30) gesteuert werden, in welchem die Preßrollen wenigstens zum Teil paarweise (3a, 3b, 5a, 5b) auf der Stange (18, 29, 68) ein und desselben Zylinders angebracht sind, **dadurch gekennzeichnet, daß** dieser Aufbau mittels eines Gelenksystems (17, 28) verwirklicht ist, das den Rollen in Preßrichtung eine Relativbewegung bezüglich einander erlaubt.

2. Vorrichtung nach Anspruch 1, **dadurch gekennzeichnet, daß** die beiden Rollen (3a, 3b, 5a, 5b) eines Paares am Ende zweier paralleler Stangen (9, 10) angebracht sind, die geführt werden, damit sie mit demselben Abstand zueinander parallel bleiben, wobei die beiden Stangen mit der Stange (18, 29, 68) des Zylinders (19, 30, 66) durch ein Gelenksystem (17) verbunden sind.

3. Vorrichtung nach Anspruch 2, **dadurch gekennzeichnet, daß** bei wenigstens einem Teil der Paare aus Rollen (3a, 3b, 5a, 5b) die beiden parallelen Stangen (9, 10) durch das Gelenksystem (17) derart am Ende der Stange (18) des Zylinders (19) angebracht sind, daß sich die Wirkung des Zylinders in der Preßebene befindet.

4. Vorrichtung nach Anspruch 2, **dadurch gekennzeichnet, daß** bei wenigstens einem Teil der Paare aus Rollen (3a, 3b, 5a, 5b) sich die beiden parallelen Stangen (46, 47) in einer anderen Ebene als der wirkungsebene der Stange (65) des Zylinders (66) befinden und mit dieser Stange durch das Gelenksystem (64) verbunden sind, das insbesondere einen Hebel (61) enthält.

5. Vorrichtung nach Anspruch 4, **dadurch gekennzeichnet, daß** die in ein und derselben Ebene, die von der Preßebene verschieden ist, angeordneten Zylinder (66) eine Zylinder-Untereinheit bilden.

6. Vorrichtung nach einem der Ansprüche 1 bis 5, **dadurch gekennzeichnet, daß** sie einen Satz (2) aus oberen Preßrollen (3) und einen Satz (4) aus unteren Preßrollen (5) umfaßt, wobei diese Sätze jeweils wenigstens zum Teil paarweise (3a, 3b, 5a, 5b) auf den Zylindern (19, 30, 66) angebrachte Rollen (3, 5) enthalten.

7. Vorrichtung nach einem der Ansprüche 1 bis 6, **dadurch gekennzeichnet, daß** die Zylinder (19, 30, 66) Pneumatikzylinder sind, wobei die Kompressionskammern der oberen Zylinder (19) mit den ihn gegenüberstehenden Kompressionskammern der unteren Zylinder (30) verbunden sind.

8. Vorrichtung nach einem der Ansprüche 1 bis 7, **dadurch gekennzeichnet, daß** sie als oberes Preßmittel eine nachgiebige zylindrische Preßrolle umfaßt, die sich über die gesamte Nutzbreite der Vorrichtung erstreckt und unter der Wirkung von oberen Preßrollen (3) gebogen wird.

9. Vorrichtung nach einem der Ansprüche 1 bis 8, **dadurch gekennzeichnet, daß** sie als unteres Preßmittel einen geformten Träger umfaßt.

10. Vorrichtung nach einem der Ansprüche 1 bis 9, **dadurch gekennzeichnet, daß** die Sätze aus Preßrollen (3, 5) auf einem Schwenkrahmen (16) angebracht sind.

11. Vorrichtung nach Anspruch 10, **dadurch gekennzeichnet, daß** der Schwenkrahmen (16) auf Mitteln (33, 37) befestigt ist, welche ihm eine Hub-Senk-Bewegung erlauben.

12. Vorrichtung nach Anspruch 10 oder 11, **dadurch gekennzeichnet, daß** sie wenigstens eine Antriebsrolle umfaßt, die an einen Motor über ein Transmissionssystem angeschlossen ist, das eine auf dem beweglichen Rahmen (16) angebrachte feste und unverformbare Welle enthält, die mit dem Motor durch eine Kette oder einen Treibriemen und mit jeder Antriebsrolle über ein Transmissionssystem verbunden ist, das einen Winkeltrieb und einen gelenkigen Aufbau enthält, der in einer im wesentlichen vertikalen Richtung verformbar ist.
